# EUROPEAN PATENT SPECIFICATION

(11) **EP 2 332 629 B1**
(45) Date of publication and mention of the grant of the patent: **01.08.2012**
(21) Application number: 09178611.1
(22) Date of filing: 10.12.2009
(51) Int. Cl.: B01D 46/00, B01D 29/64, B01D 29/35

(54) **Self cleaning filter assembly**
Selbstreinigende Filteranordnung
Ensemble de filtre autonettoyant

(30) Priority: 30.03.2009 IN MU07662009
(43) Date of publication of application: 15.06.2011
(73) Proprietor: Larsen & Toubro Limited, Mumbai (IN)
(72) Inventor: Pathiyil, Rajiv Shankar, P.O. Box No. 27, Mumbai (IN); Waghmare, Sarang Balbhim, P.O. Box No. 27, Mumbai (IN)
(74) Representative: Hellmich, Wolfgang

(56) References cited:
- EP-A1- 1 457 246
- WO-A2-2004/069372
- DE-A1- 10 252 679
- DE-A1-102007 063 243
- DE-U1-202008 011 142
- GB-A- 2 294 887
- US-A1- 2004 168 986

## Description

### FIELD OF THE INVENTION

The embodiments herein generally relates to a self cleaning filter assembly and particularly to a self cleaning filter for a fluid or fuel dispensers. The embodiments herein more particularly relates to filter cleaning mechanism in self cleaning filter assembly for fuel dispensers.

### BACKGROUND OF THE INVENTION

A fuel dispenser is a machine used in filling stations to pump petrol, diesel, kerosene and other types of fuels into vehicles. The fuel dispenser basically includes a pump, a fuel supply pipe, a flow meter and a fuel supply hose with nozzle and the indicator. The dispenser draws the fuel from the underground tank. The fuel dispenser dispenses the fuel to a vehicle tank through a nozzle. During the dispensing of the fuel, the hydraulic meter measures the amount of the fuel dispensed accurately. The measurement of dispensed fuel is conveyed by an electronic or mechanical console. One of the most important functions of the fuel dispensing system is to remove the dust particles in the fuel and to output the filtered fuel to the vehicles through the nozzle.

A fuel filtration system is generally used in the dispensers to remove large particles as well as small debris in the fuel. The solid contaminants such as dirt, rust, and the like, have always been a problem when it occurs in vehicle fuel. The fuels are dispensed directly into the vehicle fuel tanks at the service stations. However, the problem with fuel contaminants is much more serious due to universal adoption of fuel injection systems for vehicle engines. A dispensing system usually includes an underground storage tank where fuel is stored in large volumes. The fuel is pumped on demand to an aboveground dispensing unit.

In the fuel dispensing system, the combination pumping unit creates the vacuum pressure and due to this the fuel is sucked from the underground storage tank through pipe lines. The fuel which is sucked from storage tank is not cleaned. Generally, the dispensers include a fuel filtration system provided at the inlet side of the pumping unit to remove contaminants such as dirt, rust, and the like from the fuel. The filter cleans the fuel and prevents damage of sensitive parts in the fuel line. After some period, the filter gets clogged due to the accumulation of the dirt and it affects the performances of the system. As a result, we will not get the desired Liters per Minute (LPM) which is very important need. Accordingly the clogged filter needs to be cleaned frequently resulting in many visits of the service technician, more fatigue and cost. More over the clogged filter is very difficult to replace.

Hence there is a need to provide a self cleaning filter to prevent the dust from being collected inside the filter surface. Hence there is a need to provide a filter which requires less maintenance and the service cost required for cleaning the filter is less.

The above mentioned shortcomings, disadvantages and problems are addressed herein and which will be understood by reading and studying the following specification.

### SUMMARY OF THE INVENTION

The primary object is to provide a self cleaning filter with a cleaning mechanism to continuously clean the inner surface of the filtering element in the fuel dispensers easily efficiently and cheaply.

The various embodiments of the present invention provide a self cleaning filter assembly for liquid or fuel dispensers. According to one embodiment of the present invention, a self cleaning filter assembly has a filter casing provided with a filter unit. The filter unit is arranged inside the filter casing. A filter mesh element is arranged in the filter chamber provided inside the filter unit to filter the dust particles in the fluid. A check valve assembly is coupled to the filter unit and arranged inside or outside the filter unit. The check valve is lifted or opened under fuel pressure to permit the flow of the fuel. Pluralities of balls with bristles are arranged freely inside the filter unit. The pluralities of the balls with bristles get tumbled inside the filter chamber in the filter unit due to the flow of the fluid inside the filter chamber of the filter unit to rub the filter mesh element to clean the surface of the filter element. The balls with bristles settle down at the bottom, when the fuel flow is stopped. A dust collector is provided at the bottom of the filter housing to receive and hold the dust particles removed from the surface of the filter mesh element. The filter assembly further comprises a stopper provided below the filter unit to prevent the balls with bristles falling into a fuel supply line to the filter unit, when the check valve assembly is provided outside the filter unit.

The self cleaning filter assembly comprises small balls with bristles around its periphery. The bristled balls are enclosed inside the filter assembly to clean the inner surface of the filtering assembly. It is free to tumble inside the filter assembly by means of fluid pressure generated by the pump. Due to tumbling action, the bristles continuously rub the inner surface of the filtering chamber and hence it does not allow the dirt to get accumulated on the filtering element. The Self cleaning filter is used in petrol pump in all kinds of fuel or liquid dispenser. It reduces the number of cleaning cycles required for cleaning the filter thereby reducing the operational cost of filter cleaning.

### BRIEF DESCRIPTION OF THE DRAWINGS

The other objects, features and advantages will occur to those skilled in the art from the following description of the preferred embodiment and the accompanying drawings in which:

FIG. 1 shows a perspective view of a self cleaning filter assembly according to one embodiment of the present invention;

FIG. 2 shows a cross sectional view of the self cleaning filter according to one embodiment of the present invention; and

FIG. 3 shows an exploded perspective view of the self cleaning filter assembly according to one embodiment of the present invention.

Although specific features of the present invention are shown in some drawings and not in others. This is done for convenience only as each feature may be combined with any or all of the other features in accordance with the present invention.

### DETAILED DESCRIPTION OF THE INVENTION

In the following detailed description, reference is made to the accompanying drawings that form a part hereof, and in which the specific embodiments that may be practiced is shown by way of illustration. These embodiments are described in sufficient detail to enable those skilled in the art to practice the embodiments and it is to be understood that the logical, mechanical and other changes may be made without departing from the scope of the embodiments. The following detailed description is therefore not to be taken in a limiting sense.

The various embodiments of the present invention provide a self cleaning filter assembly for fluid or fuel dispensers. According to one embodiment herein, a self cleaning filter assembly has a filter casing provided with a filter unit. The filter unit is arranged inside the filter casing. A filter mesh element is arranged in the filter chamber provided inside the filter unit to filter the dust particles in the fluid. A check valve assembly is coupled to the filter unit and arranged inside/outside the filter unit. The check valve is lifted or opened under fuel pressure to permit the flow of the fuel.

Pluralities of balls with bristles are arranged freely inside the filter unit. The pluralities of the balls with bristles get tumbled inside the filter chamber in the filter unit due to the flow of the fluid inside the filter chamber of the filter unit to rub the filter mesh element to clean the surface of the filter element. The balls with bristles are tumbled and rotated continuously inside the filter chamber due to the fuel flow pressure inside the filter chamber to rub the filter mesh element continuously. The balls with bristles rub the surface of the filter mesh element to clean the surface continuously and to prevent the accumulation of the dust on the surface of the filter mesh element to maintain the constant flow of the fuel at the desired rate. The balls with bristles settle down at the bottom, when the fuel flow is stopped. The balls with bristles are rotated and tumbled, only when the fluid flow is maintained through the filter chamber. The filter assembly further comprises a stopper provided below the filter unit to prevent the balls with bristles falling into a fuel supply line to the filter unit, when the check valve assembly is provided outside the filter unit.

A dust collector is provided at the bottom of the filter housing to receive and hold the dust particles removed from the surface of the filter mesh element. A top cover is fastened to the filter casing using fasteners like bolt and nut arrangement etc.

According to one embodiment, a self cleaning filter assembly includes pluralities of small balls with bristles arranged inside the filter unit freely. The bristled balls are enclosed inside the filter assembly to clean the inner surface of the filtering assembly. The bristled balls are free to tumble inside the filter assembly, due to the fluid pressure generated by the pump. Due to tumbling action, the bristles continuously rub the inner surface of the filtering chamber. The Self cleaning filter is used in petrol pump and all kind of fuel or liquid dispenser. It reduces the number of cycle times required for cleaning the filter and reduces the operational cost of filter cleaning.

The fuel dispensers or pumps are used for dispensing fuel into vehicle. The self cleaning filter is fitted between pumping unit and inlet of the fuel dispenser in case of suction system or between submersible turbine pump and metering unit in case of a remote System. The Self cleaning filter is used in petrol pump and all kind of fuel or liquid dispenser. According to embodiment of the present invention, the self cleaning filter includes a filter assembly. The check valve assembly and balls with bristles are placed inside the filter assembly. The bristle balls are less in weight, portable and easy to replace, since its size is in microns. The filter assembly with bristled balls is enclosed in the filter casing. Accordingly, when the pump starts, due to the vacuum pressure created by the pump, the fuel is sucked from the underground fuel tank. Simultaneously, due to fuel pressure the check valve is lifted up and fuel enters inside chamber of filter assembly. The fuel flows inward to outward direction, as shown by the arrow direction. Due to flow of fluid, the bristled balls get tumbled in the inside chamber of the filter assembly and the ball bristles starts rubbing the inner filter mesh. As a result the bristled ball continuously cleans the surface of filtering element and hence prevents the dirt from getting accumulated on the filter element surface. Once the delivery stops, the dirt gets settled in the dust collector or drain plug provided at the bottom of the Filter.

After the completion of fuel delivery process, when the pump is stopped, the balls get settled down. Again with next delivery, the pressure rises and the balls start tumbling inside the filter chamber. Because of this repeated operation, effective performance of self cleaning operation of the filter is achieved. The cycle time of filter cleaning process is increased and the filter clogging problem gets reduced. The self cleaning filter is suitable for low and high flow rate pumps/dispensers.

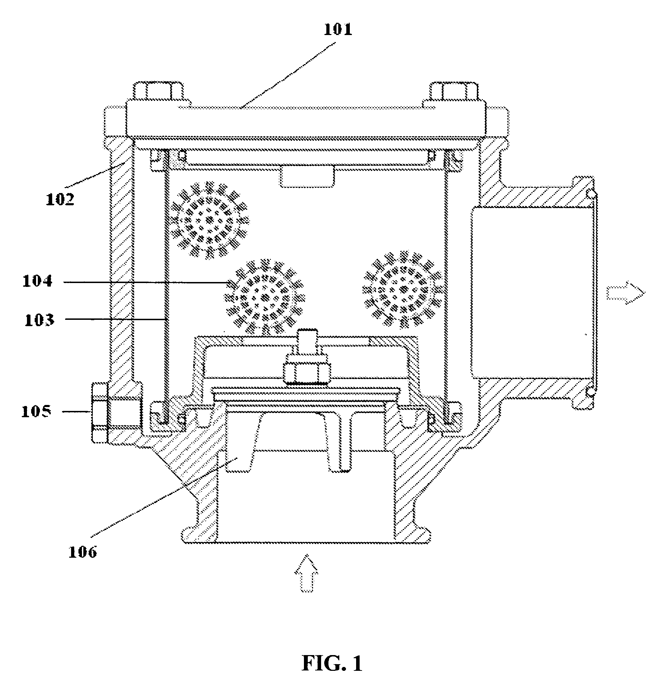

FIG. 1 shows a perspective view of a self cleaning filter assembly according to one embodiment. As shown in figure 1, the self cleaning filter includes a filter assembly 103 which is enclosed in the filter casing 102 and closed using top cover 101. The check valve assembly 106 and balls with bristles 104 are enclosed inside the filter assembly 103. The size of the bristled balls 104 is in microns. Accordingly, when the pump starts, due to the vacuum pressure created by the pump, the fuel is sucked from the underground fuel tank. Simultaneously, due to fuel pressure, the check valve 106 is lifted and the fuel enters inside the chamber of filter assembly 103. Due to the flow of the fluid, the balls with bristles104 get tumbled in the inside chamber of the filter assembly 103 and the ball bristles 104 starts rubbing the filter mesh element .As a result, the bristled ball 104 continuously cleans the surface of filtering element and hence prevents the dirt from getting accumulated on the surface of the filter mesh element. Once the delivery stops, the dirt gets settled in the dust collector or drain plug 105provided at the bottom of the filter assembly. After the completion of fuel delivery process, when the pump is stopped, the balls with bristles 104 get settled down. Again with next delivery, the pressure rises and balls with bristles 104 starts tumbling inside the filter chamber. Because of this repeated operation, effective performance of filter self cleaning process is achieved. The cycle time of filter cleaning is increased and the filter clogging problem gets reduced. The self cleaning filter is suitable for low and high flow rate pumps/dispensers.

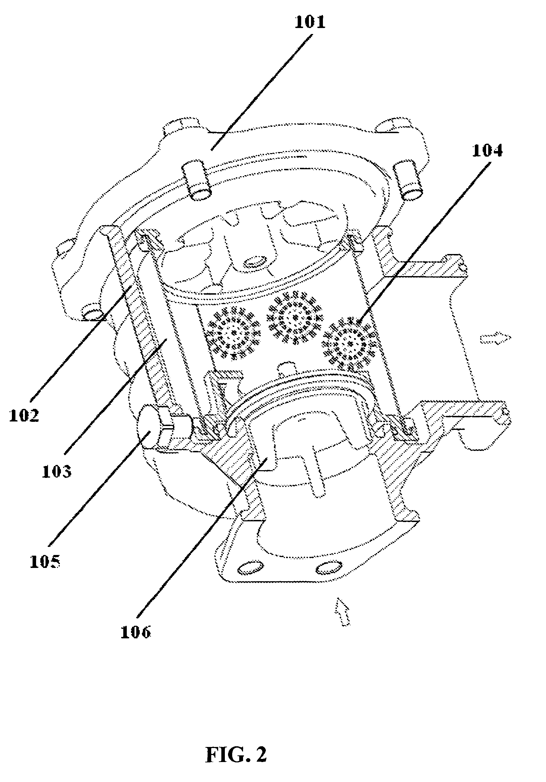

FIG. 2 shows a cross sectional view of the self cleaning filter according to one embodiment. As shown in figure 2, the balls with bristles 104 around its periphery are enclosed inside the filter assembly. The balls with bristles104 are free to tumble inside the filter assembly 103. When pump starts, the fuel is sucked from the underground fuel tank due to vacuum pressure. Due to fuel pressure, the check valve 106 gets lifted and fuel enters inside chamber of filter element and flows inward to outward direction, in the direction of arrow. Due to the flow of fluid, the balls with bristles 104 get tumbled inside the filter assembly 103 and the bristles 104 start rubbing the inner surface. As a result, it continuously cleans the inner surface of filter. When the pump stops, the dirt gets settled in the dust collector 105 provided at the bottom of the filter.

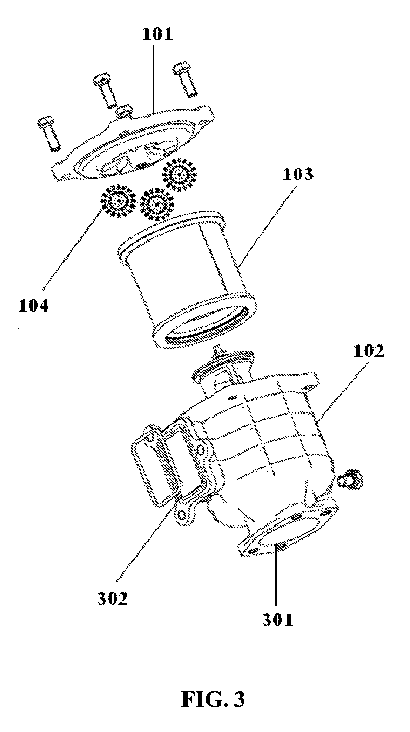

FIG. 3 shows an exploded view of the self cleaning filter according to embodiment. As shown in figure 3, the filter casing 102 includes inlet 301 and outlet 302 opening. It includes a check valve assembly 106 at the bottom of the casing 102. The check valve assembly 106 and balls with bristles 104 are enclosed in the filter assembly 103. The entire filter assembly is enclosed in a casing 102 and closed using a top cover 101. When the pump starts, due to the vacuum pressure created by the pump, the fuel is sucked from the underground fuel tank. Due to the fuel pressure, the check valve 106 gets lifted and fuel enters inside chamber of filter assembly 103 and flows inward through the inlet valve 301. Due to the flow of fluid, the balls with bristles 104 get tumbled in the inside chamber of the filter assembly 103 and the ball bristles 104 start rubbing the filter mesh element. As a result, the balls with bristles 104 continuously cleans the surface of filter mesh element and hence eliminates the dirt from getting accumulated on the filter mesh element surface. The filtered fuel is output through the outlet opening 302 in the casing 102. Once the delivery stops, the dirt gets settled in the dust collector or drain plug 105 provided at the bottom of the filter. The drain plug 105or dust collector is opened to remove the dust particles. After the completion of the fuel delivery process, when the pump is stopped, the balls get settled down. Again with next delivery, the pressure rises and balls start tumbling inside the filter chamber. Because of this repeated operation, effective performance of self cleaning operation of the filter is achieved.

The various embodiments of the present invention provide a self cleaning filter assembly for fluid or fuel dispensers. It comprises pluralities of bristled balls enclosed inside the filter casing to continuously clean the inner surface of the filtering assembly and to prevent the dust from being collected inside the filter element surface. The self cleaning filter in the present invention is suitable for all liquids with different densities. It reduces the filter clogging time. The cycle time of filter cleaning is increased and the filter clogging problem is reduced. The self cleaning filter is suitable for low and high flow rate pumps or dispensers. The bristle balls are less in weight, portable and easy to replace. As a result, the maintenance and the operational or service cost required is less.

Although the invention is described with various specific embodiments, it will be obvious for a person skilled in the art to practice the invention with modifications. However, all such modifications are deemed to be within the scope of the claims.

It is also to be understood that the following claims are intended to cover all of the generic and specific features of the present invention described herein and all the statements of the scope of the invention which as a matter of language might be said to fall there between.

## Claims

1. A self cleaning filter assembly comprising:
a filter casing;
a filter unit arranged inside the filter casing;
a filter chamber provided inside the filter unit;
a filter mesh element arranged in the filter chamber;
a check valve assembly coupled to the filter unit;
plurality of balls with bristles arranged freely inside the filter unit;
wherein the plurality of the balls with bristles get tumbled inside the filter chamber in the filter unit due to the flow of the fluid inside the filter chamber of the filter unit to rub the filter mesh element to clean the surface of the filter element.

2. The filter assembly according to claim 1, wherein the check valve is lifted or opened under fuel pressure to permit the flow of the fuel.

3. The filter assembly according to claim 1, the balls with bristles are tumbled and rotated continuously inside the filter chamber due to the fuel flow pressure inside the filter chamber to rub the filter mesh element continuously.

4. The filter assembly according to claim 1, wherein the balls with bristles rub the surface of the filter mesh element to clean the surface continuously and to prevent the accumulation of the dust on the surface of the filter mesh element to maintain the constant flow of the fuel at the desired rate.

5. The filter assembly according to claim 1, further comprises a dust collector provided at the bottom of the filter housing.

6. The filter assembly according to claim 5, wherein the dust collector receives and holds the dust particles removed from the surface of the filter mesh element.

7. The filter assembly according to claim 1, wherein the balls with bristles settle down at the bottom, when the fuel flow is stopped.

8. The filter assembly according to claim 1, wherein the check valve assembly is arranged inside the filter unit.

9. The filter assembly according to claim 1, wherein the check valve assembly is arranged outside the filter unit.

10. The filter assembly according to claim 1, further comprises a top cover fastened to the filter casing.

11. The filter assembly according to claim 1, wherein the balls with bristles are rotated and tumbled, only when the fluid flow is maintained through the filter chamber.

12. The filter assembly according to claim 1, further comprising a stopper provided below the filter unit to prevent the balls with bristles falling into a fuel supply line to the filter unit, when the check valve assembly is provided outside the filter unit.

## Patentansprüche

1. Eine selbstreinigende Filteranordnung mit:
einem Filtergehäuse;
einer Filtereinheit, die im Inneren des Filtergehäuses angeordnet ist;
einer Filterkammer, die sich im Inneren der Filtereinheit befindet;
einem Filtergewebebauteil, das in der Filterkammer angeordnet ist;
einer Rückschlagventilanordnung, die an der Filtereinheit angekuppelt ist;
einer Vielzahl an Bällen mit Borsten, die frei im Inneren der Filtereinheit angeordnet sind;
wobei die Vielzahl an Bällen mit Borsten im Inneren der Filterkammer in der Filtereinheit aufgrund des Fließens der Flüssigkeit im Inneren der Filterkammer der Filtereinheit durcheinanderwirbelt werden, um das Filtergewebebauteil abzureiben, um die Oberfläche des Filterelements zu reinigen.

2. Filteranordnung gemäß Anspruch 1, **dadurch gekennzeichnet, dass** das Rückschlagventil unter Kraftstoffdruck angehoben oder geöffnet wird, um dem Kraftstoff den Durchfluss zu ermöglichen.

3. Filteranordnung gemäß Anspruch 1, **dadurch gekennzeichnet, dass** die Bälle mit Borsten im Inneren der Filterkammer aufgrund des Kraftstoffflussdrucks im Inneren der Filterkammer kontinuierlich durcheinandergewirbelt und rotiert werden, um das Filtergewebebauteil kontinuierlich abzureiben.

4. Filteranordnung gemäß Anspruch 1, **dadurch gekennzeichnet, dass** die Bälle mit Borsten die Oberfläche des Filtergewebebauteils abreiben, um kontinuierlich die Oberfläche zu reinigen und die Ansammlung von Staub auf der Oberfläche des Filtergewebebauteils zu verhindern, um den konstanten Durchfluss des Kraftstoffs in der gewünschten Rate zu erhalten.

5. Filteranordnung gemäß Anspruch 1, **dadurch gekennzeichnet, dass** sie weiter einen Staubsammler enthält, der sich auf dem Boden des Filtergehäuses befindet.

6. Filteranordnung gemäß Anspruch 5, **dadurch gekennzeichnet, dass** der Staubsammler die Staubpartikel, die von der Oberfläche des Filtergewebebauteils entfernt wurden, aufnimmt und festhält.

7. Filteranordnung gemäß Anspruch 1, **dadurch gekennzeichnet, dass** sich die Bälle mit Borsten am Boden niederlassen, wenn der Kraftstoffdurchfluss gestoppt wird.

8. Filteranordnung gemäß Anspruch 1, **dadurch gekennzeichnet, dass** sich die Rückschlagventilanordnung im Inneren der Filtereinheit befindet.

9. Filteranordnung gemäß Anspruch 1, **dadurch gekennzeichnet, dass** sich die Rückschlagfilteranordnung außerhalb der Filtereinheit befindet.

10. Filteranordnung gemäß Anspruch 1, **dadurch gekennzeichnet, dass** sie weiter eine Obere Abdeckung enthält, die am Filtergehäuse befestigt ist.

11. Filteranordnung gemäß Anspruch 1, **dadurch gekennzeichnet, dass** die Bälle mit Borsten nur dann rotiert und durcheinandergewirbelt werden, wenn die der Flüssigkeitsdurchfluss durch die Filterkammer konstant gehalten wird.

12. Filteranordnung gemäß Anspruch 1, **dadurch gekennzeichnet, dass** weiter ein Stopper unterhalb der Filtereinheit enthalten ist, um die Bälle mit Borsten davon abzuhalten, in eine Kraftstoffzufuhrleitung zur Filtereinheit zu fallen, wenn sich die Rückschlagventilanordnung außerhalb der Filtereinheit befindet.

## Revendications

1. Ensemble de filtre autonettoyant comprenant :
un carter de filtre ;
une unité de filtrage agencée à l'intérieur du carter de filtre ;
une chambre de filtrage placée à l'intérieur de l'unité de filtrage ;
un élément à mailles de filtrage agencé dans la chambre de filtrage ;
un ensemble de soupape de contrôle couplé à l'unité de filtrage ;
une pluralité de balles à brossettes agencées librement à l'intérieur de l'unité de filtrage ;
dans lequel la pluralité de balles à brossettes sont amenées à tomber à l'intérieur de la chambre de filtrage placée dans l'unité de filtrage du fait de l'écoulement de fluide à l'intérieur de la chambre de filtrage de l'unité de filtrage pour frotter l'élément à mailles de filtrage en vue de nettoyer la surface de l'élément de filtrage.

2. Ensemble de filtre selon la revendication 1, dans lequel la soupape de contrôle est soulevée ou ouverte sous l'effet de la pression du carburant pour permettre l'écoulement du carburant.

3. Ensemble de filtre selon la revendication 1, les balles à brossettes étant amenées à tomber et à tourner en continu à l'intérieur de la chambre de filtrage sous l'effet de la pression du flux du carburant régnant à l'intérieur de la chambre de filtrage afin de frotter l'élément de filtrage en continu.

4. Ensemble de filtre selon la revendication 1, dans lequel les balles à brossettes frottent la surface de l'élément à mailles de filtrage afin d'en nettoyer la surface en continu et d'empêcher l'accumulation de poussière sur la surface de l'élément à mailles de filtrage en vue de maintenir l'écoulement constant de carburant à la vitesse souhaitée.

5. Ensemble de filtre selon la revendication 1, comprenant en outre un collecteur de poussière placé au niveau du fond du carter de filtre.

6. Ensemble de filtre selon la revendication 5, dans lequel le collecteur de poussière reçoit et retient les particules de poussière retirées de la surface de l'élément à mailles de filtrage.

7. Ensemble de filtre selon la revendication 1, dans lequel les balles à brossettes redescendent dans le fond lorsque l'écoulement de carburant est interrompu.

8. Ensemble de filtre selon la revendication 1, dans lequel l'ensemble de soupape de contrôle est agencé à l'intérieur de l'unité de filtrage.

9. Ensemble de filtre selon la revendication 1, dans lequel l'ensemble de soupape de contrôle est agencé à l'extérieur de l'unité de filtrage.

10. Ensemble de filtre selon la revendication 1, comprenant en outre un cache supérieur fixé au carter de filtre.

11. Ensemble de filtre selon la revendication 1, dans lequel les balles à brossettes sont amenées à tourner et à tomber seulement lorsque l'écoulement fluide est maintenu à travers la chambre de filtrage.

12. Ensemble de filtre selon la revendication 1, comprenant en outre une butée placée en dessous de l'unité de filtrage pour empêcher les balles à brossettes de tomber dans une conduite d'alimentation en carburant reliée à l'unité de filtrage, lorsque l'ensemble de soupape de contrôle est placé à l'extérieur de l'unité de filtrage.
